(19) Europäisches Patentamt

European Patent Office

Office européen des brevets

(11) **EP 4 733 802 A1**

(12) **EUROPEAN PATENT APPLICATION**

(43) Date of publication:
29.04.2026 Bulletin 2026/18

(21) Application number: 25182093.2

(22) Date of filing: 11.06.2025

(51) International Patent Classification (IPC):
**G01S 7/481** (2006.01)    **G01S 17/08** (2006.01)
**G01S 17/58** (2006.01)

(52) Cooperative Patent Classification (CPC):
**G01S 7/4817; G01S 7/4811; G01S 17/08;
G01S 17/58**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 28.10.2024 US 202463712843 P
24.12.2024 TW 113150437

(71) Applicant: **Delta Electronics, Inc.
Taoyuan County 33341 (TW)**

(72) Inventors:
• **LIN, En-Hung
33341 Taoyuan City (TW)**

• **CHEN, Hsin-Hua
33341 Taoyuan City (TW)**
• **CHANG, Teng-Hsiang
33341 Taoyuan City (TW)**
• **ZHANG, He
33341 Taoyuan City (TW)**
• **LI, Dongdong
TRION (SG)**
• **KEE, Jack Sheng
TRION (SG)**

(74) Representative: **2K Patent Partnerschaft mbB
Hamburger Allee 26-28
60486 Frankfurt am Main (DE)**

(54) **OPTICAL PHASED ARRAY CHIP AND SENSING METHOD THEREOF**

(57) An optical phased array chip (1) includes: a light-emitting unit (11), configured to generate an optical emission signal (LT); a beam-splitting unit (12), connected to the light-emitting unit (11), and configured to transmit the optical emission signal (LT) to an optical antenna unit (13) and receive and transmit a diffusely reflected optical return signal (RLT) to a photodetector unit (14); the optical antenna unit (13), connected to the beam-splitting unit (12), configured to transmit the optical emission signal (LT), and configured to receive and transmit the diffusely reflected optical return signal (RLT) to the beam-splitting unit (12); the photodetector unit (14), connected to the beam-splitting unit (12), and configured to receive and transmit the diffusely reflected optical return signal (RLT) to a signal processing unit (15); and the signal processing unit (15), connected to the photodetector unit (14), and configured to receive the diffusely reflected optical return signal (RLT) in an electric current signal manner converted by the photodetector unit (14) and generate a sensing information.

FIG.1

EP 4 733 802 A1

## Description

BACKGROUND OF THE DISCLOSURE

Technical Field

The present disclosure relates to an optical phased array chip, particularly relates to an optical phased array chip that may transmit and receive a signal.

Description of Related Art

The optical phased array generally being used for a LiDAR includes a light-emitting unit, a plurality of optical phase shifting units, an optical antenna unit, and a receiving unit. The light-emitting unit generates an optical emission signal. The optical phase shifting units receive, phase-shift, and transmit the optical emission signals. The optical antenna unit emits the optical emission signal. The optical phase shifting units change a phase of the optical emission signal and, make the optical emission signal form a light spot in the far field through the interference principle of wave optics. The optical phase shifting units may change the phase of the optical emission signal according to different modes to form the light spot at different far-field positions. However, the LiDAR in the related-art requires a receiving unit in addition to the optical phased array. The receiving unit is used to receive a reflected light from the light spot, and then a distance information is calculated through a signal processing unit.

In view of this, how to integrate signal emission and signal reception in a single component to improve the size and manufacturing cost of the device is one of the current problems that needs to be solved.

SUMMARY OF THE DISCLOSURE

The present disclosure provides an optical phased array chip and a sensing method thereof, which may obtain a distance information and a speed information between the optical phased array chip and an object to be measured. Furthermore, since the optical phased array chip of the present disclosure does not need to rely on an additional lens component and light-sensitive element to achieve the effect of receiving light, the size of the device and the manufacturing cost may be reduced.

The present disclosure provides an optical phased array chip, including: a light-emitting unit, configured to generate an optical emission signal; a beam-splitting unit, connected to the light-emitting unit, and configured to transmit the optical emission signal to an optical antenna unit and receive and transmit a diffusely reflected optical return signal to a photodetector unit; the optical antenna unit, connected to the beam-splitting unit, configured to transmit the optical emission signal, and configured to receive and transmit the diffusely reflected optical return signal to the beam-splitting unit; the photodetector unit, connected to the beam-splitting unit, and configured to receive and transmit the diffusely reflected optical return signal to a signal processing unit; and the signal processing unit, connected to the photodetector unit, and configured to receive the diffusely reflected optical return signal in an electric current signal manner converted by the photodetector unit and generate a sensing information.

In some embodiments, the beam-splitting unit includes: a first directional coupling unit, a first side thereof connected to the light-emitting unit and the photodetector unit, and a second side thereof connected to the optical antenna unit; wherein, the first side and the second side are opposite sides of the first directional coupling unit.

In some embodiments, the beam-splitting unit includes: a first directional coupling unit, a first side thereof connected to the light-emitting unit; and a second directional coupling unit, a first side thereof connected to a second side of the first directional coupling unit, and a second side thereof connected to the optical antenna unit; wherein, the first side of the first directional coupling unit or the first side of the second directional coupling unit is connected to the photodetector unit.

In some embodiments, the beam-splitting unit includes: an optical phase shifting unit, including a first port and a second port, the first port connected to the second side of the second directional coupling unit, and the second port connected to the optical antenna unit.

In some embodiments, the beam-splitting unit includes: a first multimode interference unit, a first side thereof connected to the light-emitting unit and the photodetector unit, and a second side thereof connected to the optical antenna unit; wherein, the first side and the second side are opposite sides of the first multimode interference unit.

In some embodiments, the beam-splitting unit includes: a first multimode interference unit, a first side thereof connected to the light-emitting unit; and a second multimode interference unit, a first side thereof connected to a second side of the first multimode interference unit, and a second side thereof connected to the optical antenna unit; wherein, the first side of the first multimode interference unit or the first side of the second multimode interference unit is connected to the photodetector unit.

In some embodiments, the beam-splitting unit includes: an optical phase shifting unit, including a first port and a second port, the first port connected to the second side of the second multimode interference unit, and the second port connected to the optical antenna unit.

In some embodiments, the beam-splitting unit includes: a first ring resonance unit, a first side thereof connected to the light-emitting unit and the photodetector unit, and a second side thereof connected to the optical antenna unit; wherein, the first side and the second side are opposite sides of the first ring resonance unit.

In some embodiments, the beam-splitting unit includes: a first ring resonance unit, a first side thereof connected to the light-emitting unit; and a second ring resonance unit, a first side thereof connected to a second side of the first ring resonance unit, and a second side thereof connected to the optical antenna unit; wherein, the first side of the first ring resonance unit or the first side of the second ring resonance unit is connected to the photodetector unit.

In some embodiments, the beam-splitting unit includes: an optical phase shifting unit, including a first port and a second port, the first port connected to the second side of the second ring resonance unit, and the second port connected to the optical antenna unit.

The present disclosure provides an optical phased array chip, including: a light-emitting unit, configured to generate an optical emission signal; a plurality of optical antenna units; a beam-splitting unit, disposed between the light-emitting unit and the optical antenna units; a photodetector unit, connected to the beam-splitting unit; and a signal processing unit, connected to the photodetector unit; wherein, the beam-splitting unit is configured to receive and transmit the optical emission signal to the optical antenna units, the optical antenna units are configured to emit the optical emission signal and receive a diffusely reflected optical return signal, the beam-splitting unit is configured to receive and transmit the diffusely reflected optical return signal to the photodetector unit, the photodetector unit is configured to receive and convert the diffusely reflected optical return signal into an electric current signal form and transmit that to the signal processing unit, and the signal processing unit is configured to generate a sensing information based on the diffusely reflected optical return signal.

In some embodiments, the optical phased array chip, further including: a plurality of optical phase shifting units, each of the optical phase shifting units connected to each of the optical antenna units, and configured to receive, phase shift, and transmit the optical emission signal.

In some embodiments, the optical phase shifting units include: a thermo-optics phase shifter or a free-carrier-depletion-based phase shifter.

In some embodiments, the optical phased array chip, further including: a plurality of phase-compensated waveguide units, each of the phase-compensated waveguide units connected to each of the optical phase shifting units and each of the optical antenna units, and configured to receive and transmit the optical emission signal; wherein, each of the phase-compensated waveguide units performs a phase compensation on the optical emission signal.

In some embodiments, the beam-splitting unit includes: a first directional coupling unit, a first side thereof connected to the light-emitting unit and the photodetector unit, and a second side thereof connected to the optical antenna units; wherein, the first side and the second side are opposite sides of the first directional coupling unit.

In some embodiments, the beam-splitting unit includes: a first multimode interference unit, a first side thereof connected to the light-emitting unit and the photodetector unit, and a second side thereof connected to the optical antenna units; wherein, the first side and the second side are opposite sides of the first multimode interference unit.

In some embodiments, the beam-splitting unit includes: a first ring resonance unit, a first side thereof connected to the light-emitting unit and the photodetector unit, and a second side thereof connected to the optical antenna units; wherein, the first side and the second side are opposite sides of the first ring resonance unit.

The present disclosure provides a sensing method of an optical phased array chip, including: emitting an optical emission signal to an object to be measured through a plurality of optical antenna units of the optical phased array chip; generating a diffusely reflected optical return signal corresponding to the optical emission signal through the object to be measured; receiving and transmitting the diffusely reflected optical return signal to a beam-splitting unit of the optical phased array chip through the optical antenna units; transmitting the diffusely reflected optical return signal to a signal processing unit of the optical phased array chip through the beam-splitting unit; and generating a sensing information through the signal processing unit.

In some embodiments, between emitting an optical emission signal to the object to be measured through the optical antenna units of the optical phased array chip and generating the diffusely reflected optical return signal corresponding the optical emission signal through the object to be measured further includes: performing a phase compensation on the optical emission signal through a plurality of phase-compensated waveguide units of the optical phased array chip.

In some embodiments, transmitting the diffusely reflected optical return signal to a signal processing unit of the optical phased array chip through the beam-splitting unit further includes: transmitting the diffusely reflected optical return signal to a plurality of photodetector units of the optical phased array chip through the beam-splitting unit; converting the diffusely reflected optical return signal into an electric current signal form through the photodetector units; generating a sensing information through the signal processing unit further includes: generating a distance and speed information based on the diffusely reflected optical return signal of the electric current signal form through one of the photodetector units through the signal processing unit; and generating a light energy information based on the diffusely reflected optical return signal of the electric current signal form through another one of the photodetector units through the signal processing unit.

In summary, the optical phased array chip and the sensing method thereof of the present disclosure may simultaneously transmit and receive a signal to obtain the distance information and the speed information of the object to be measured. Since the optical phased array chip of the present disclosure achieves the effect of receiving light by skipping the lens component and the light-sensitive element, the size of the device and the manufacturing cost may be reduced.

Moreover, the beam-splitting unit of the optical phased array chip of the embodiment may have equal to or more than three ports respectively connected to the light-emitting unit, the optical antenna unit, the photodetector unit, and other photodetector units to monitor the energy of the optical emission signal and the diffusely reflected optical return signal. In addition, the beam-splitting unit of the optical phased array chip of the present disclosure may have the optical phase shifting unit to adjust the phase of the optical emission signal or the optical emission signal to make the power of the optical emission signal and the power of the diffusely reflected optical return signal be at a higher energy level simultaneously. Moreover, the beam-splitting unit may be designed in different ways based on different requirements.

Further, the optical phased array chip and the sensing method thereof of the present disclosure may form a light spot at different far-field positions at different times to achieve the effect of space scanning. Moreover, each of the phase detectors of the optical phased array chip of the present disclosure is connected (for example, through an optical waveguide) to each of the optical antenna units. The designer may obtain the phase of the optical emission signal at the far field position from each of the optical antenna units through the phase detectors to optimize the phase shift angle of optical phase shifting units and make the optical emission signal form a more ideal spot in the far field to increase a sensing accuracy. Moreover, the photodetector unit of the optical phased array chip of the present disclosure includes an optical beam mixer and a balanced photodiode to obtain additional speed information of the object to be measured. Further, the phase-compensated waveguide units of the optical phased array chip of the present disclosure may form the light spot to nearly be a single point in the far field through the optical antenna units to increase the sensing accuracy.

BRIEF DESCRIPTION OF THE DRAWINGS

Figure 1 is a block diagram of the optical phased array chip in accordance with a first embodiment of the present disclosure.

Figure 2A is a schematic diagram of an embodiment of the optical antenna unit of the optical phased array chip in accordance with the present disclosure.

Figure 2B is a schematic diagram of a variation of the optical antenna unit of the optical phased array chip in accordance with the present disclosure.

Figure 2C is a schematic diagram of a variation of the optical antenna unit of the optical phased array chip in accordance with the present disclosure.

Figure 3 is a schematic diagram of the effect of the beam-splitting of the directional coupling unit of the beam-splitting unit of the optical phased array chip in accordance with the present disclosure.

Figure 4A is a schematic diagram of an embodiment of the beam-splitting unit of the optical phased array chip in accordance with the present disclosure.

Figure 4B is a schematic diagram of a variation of the beam-splitting unit of the optical phased array chip in accordance with the present disclosure.

Figure 4C is a schematic diagram of another variation of the beam-splitting unit of the optical phased array chip in accordance with the present disclosure.

Figure 5 is a schematic diagram of the effect of the optical phase shifting unit of the beam-splitting unit of the optical phased array chip in accordance with the present disclosure.

Figure 6A is a schematic diagram of an embodiment of the optical phase shifting unit of the beam-splitting unit of the optical phased array chip in accordance with the present disclosure.

Figure 6B is a schematic diagram of another embodiment of the optical phase shifting unit of the beam-splitting unit of the optical phased array chip in accordance with the present disclosure.

Figure 7A is a schematic diagram of an embodiment of the effect of the beam-splitting of the multimode interference unit of the beam-splitting unit of the optical phased array chip in accordance with the present disclosure.

Figure 7B is a schematic diagram of another embodiment of the effect of the beam-splitting of the multimode interference unit of the beam-splitting unit of the optical phased array chip in accordance with the present disclosure.

Figure 8A is a schematic diagram of another variation of the beam-splitting unit of the optical phased array chip in accordance with the present disclosure.

Figure 8B is a schematic diagram of another variation of the beam-splitting unit of the optical phased array chip in accordance with the present disclosure.

Figure 8C is a schematic diagram of another variation of the beam-splitting unit of the optical phased array chip in accordance with the present disclosure.

Figure 9 is a schematic diagram of the effect of the beam-splitting of the ring resonance unit of the beam-splitting unit of the optical phased array chip in accordance with the present disclosure.

Figure 10A is a schematic diagram of another variation of the beam-splitting unit of the optical phased array chip in accordance with the present disclosure.

Figure 10B is a schematic diagram of another variation of the beam-splitting unit of the optical phased array chip in accordance with the present disclosure.

Figure 10C is a schematic diagram of another variation of the beam-splitting unit of the optical phased array chip in accordance with the present disclosure. Figure 11 is a schematic diagram of the optical phased array chip in accordance with a second embodiment of the present disclosure.

Figure 12A is a block diagram of the optical phased array chip in accordance with the second embodiment of the present disclosure.

Figure 12B is a block diagram of a variation of the optical phased array chip in accordance with the second embodiment of the present disclosure.

Figure 12C is a block diagram of another variation of the optical phased array chip in accordance with the second embodiment of the present disclosure.

Figure 13 is a schematic diagram of a variation of the frequency-modulated continuous wave of the optical emission signal in accordance with the second embodiment of the present disclosure.

Figure 14 is a schematic diagram of the phase-compensated waveguide unit of the optical phased array chip in accordance with the present disclosure.

Figure 15A is a schematic diagram of the far field spot of the optical phased array chip in accordance with the present disclosure.

Figure 15B is a schematic diagram of the compensation effect of the phase-compensated waveguide unit of the optical phased array chip in accordance with the present disclosure.

Figure 16 is a flowchart of the sensing method in accordance with an embodiment of the present disclosure.

DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

As used in the present disclosure, terms such as "first", "second", "third", and "fourth" are employed to describe various elements, components, regions, layers, and/or parts. These terms should not be construed as limitations on the mentioned elements, components, regions, layers, and/or parts. Instead, they are used merely for distinguishing one element, component, region, layer, or part from another. Unless explicitly indicated in the context, the usage of terms such as "first", "second", "third", and "fourth" does not imply any specific sequence or order.

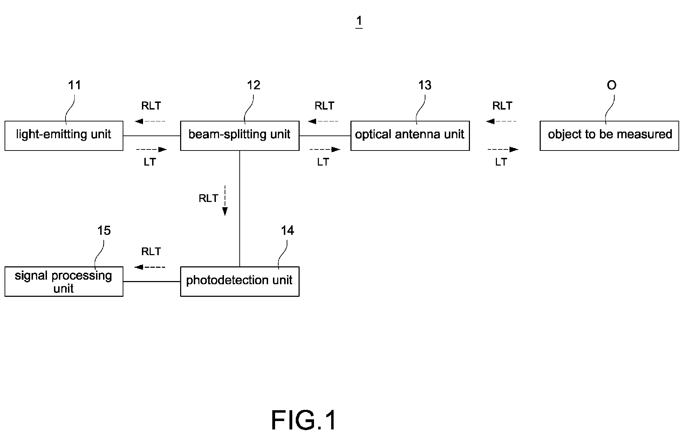

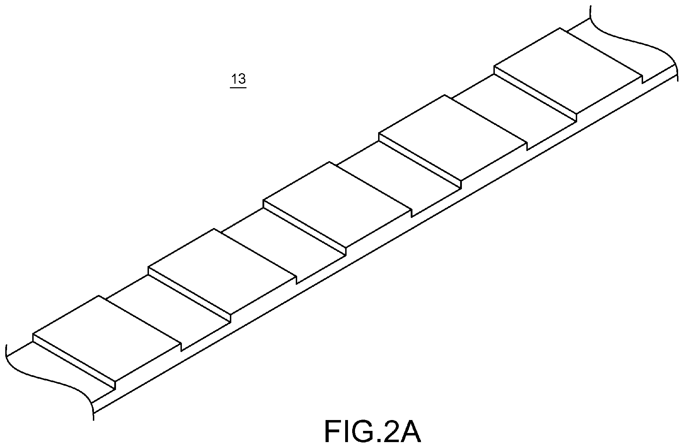

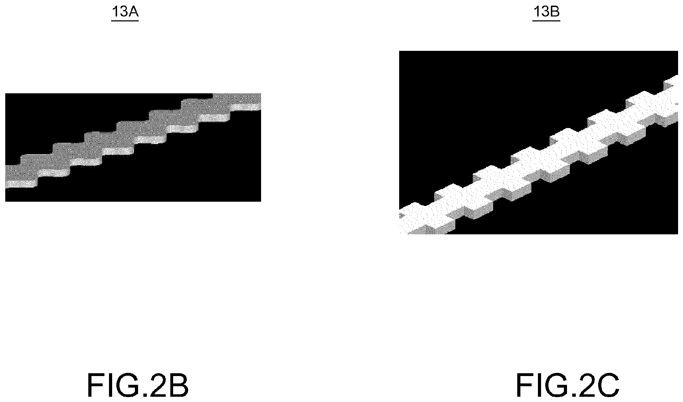

Figure 1 is a block diagram of the optical phased array chip in accordance with a first embodiment of the present disclosure. Figure 2A is a schematic diagram of an embodiment of the optical antenna unit of the optical phased array chip in accordance with the present disclosure. Figure 2B is a schematic diagram of a variation of the optical antenna unit of the optical phased array chip in accordance with the present disclosure. Figure 2C is a schematic diagram of a variation of the optical antenna unit of the optical phased array chip in accordance with the present disclosure. Please refer to Figure 1, Figure 2A, Figure 2B, and Figure 2C, an optical phased array chip 1 of the first embodiment includes a light-emitting unit 11, a beam-splitting unit 12, an optical antenna unit 13, a photodetector unit 14, and a signal processing unit 15. It is worth mentioning that the optical phased array chip 1 is, for example, a silicon photonic chip. Here is not intended to be limiting.

The light-emitting unit 11 is configured to generate an optical emission signal LT. The light-emitting unit 11 may be a light-emitting diode. Here is not intended to be limiting. The frequency band of the optical emission signal LT may be microwave, infrared, or visible light. The optical emission signal LT may be a pulse wave signal or a continuous wave signal. The optical emission signal LT may be in the form of a square wave or a sine wave. The light-emitting unit 11 may generate the optical emission signal LT through an electric voltage signal or an electric current signal.

The beam-splitting unit 12 is connected to the light-emitting unit 11, and configured to receive and transmit the optical emission signal LT. The beam-splitting unit 12, for example, may be disposed between the light-emitting unit 11 and the optical antenna unit 13. It should be noted that the term "connected" may include direct connection, indirect connection, electrical connection, optically coupled, or electrically coupled. A signal may be transmitted between two connected elements, and the signal may be transmitted through other elements or may be transmitted directly. In some embodiments, the beam-splitting unit 12 and the light-emitting unit 11 may be connected through an optical waveguide. Here is not intended to be limiting. The beam-splitting unit 12 may include, for example, a directional coupler unit, a multimode interference unit, a ring resonator unit, and/or a combination thereof. The combination manner may be, for example, manufacturing through separate processes and then performing a connection process, or directly manufacturing through the same process. The beam-splitting unit 12 may, for example, propagate, diffract, and interfere through the wave nature of light to achieve the effect of light splitting, and the beam-splitting unit 12 may retain the optical emission signal LT. The beam-splitting unit 12 may, for example, split 90% of the energy of the optical emission signal LT to the optical antenna unit 13 to emit the optical emission signal LT, and split 10% of the energy of the optical emission signal LT to other sensors to monitor the energy of the optical emission signal LT. The beam-splitting unit 12 may, for example, split 70% of the energy of the optical emission signal LT to the optical antenna unit 13 to emit the optical emission signal LT, and split 20% of the energy of the optical emission signal LT to other sensors to monitor the energy of the optical emission signal LT. 10% of the energy is lost.

The optical antenna unit 13 is connected (for example, through an optical waveguide) to the beam-splitting unit 12, emits the optical emission signal LT receives a diffusely reflected optical return signal RLT, and transmits the diffusely reflected optical return signal RLT to the beam-splitting unit 12. The optical antenna unit 13 may be, for example, an optical antenna unit 13 formed by periodical shallow etching, an optical antenna unit 13A in an arc shape, an optical antenna unit 13B in a herringbone shape, or a grating structure in other shapes. The size of the structure of the optical antenna unit 13 is corresponding to the material and corresponding effective refractive index, wavelength of the optical emission signal LT, emitting angle of the optical emission signal LT, period of the grating, etching depth of the grating, and shape of the grating, to make the optical emission signal LT form diffraction and interference. As a result, the optical antenna unit 13 emits the optical emission signal LT. An emitted light angle of the optical emission signal LT emitted by the optical antenna unit 13 may be controlled by the wavelength of the optical emission signal LT, the period of the grating, the etching depth of the grating, and the shape of the grating. An object to be measured O is illuminated by the optical emission signal LT to form the diffusely reflected optical return signal RLT. The optical antenna unit 13 may receive the diffusely reflected optical return signal RLT. In the embodiment, the optical antenna unit 13 is directly connected to the beam-splitting unit 12. In other embodiments, the optical antenna unit 13 may be indirectly connected to the beam-splitting unit 12. Other components may be arranged between the optical antenna unit 13 and the beam-splitting unit 12.

It is worth mentioning that the optical antenna unit 13 and the beam-splitting unit 12 may be separated by a splitter tree (not shown in figures). Here is not intended to be limiting. The splitter tree is an optical distribution structure that may be used to distribute an input single signal to a plurality of output channels through a multi-stage beam splitting process. The splitter tree divides a single light source into a plurality of single signals step by step and eventually distributes the optical power evenly or in a specific proportion to subsequent units (such as the optical antenna unit 13).

The photodetector unit 14 is connected (for example, through an optical waveguide) to the beam-splitting unit 12, and configured to receive the diffusely reflected optical return signal RLT. The photodetector unit 14 may be, for example, a phototransistor, a photodiode, a photoresistor, a charge-coupled device (CCD), a complementary metal-oxide-semiconductor (CMOS), or an avalanche photodiode (APD). Here is not intended to be limiting. The photodetector unit 14 may receive the diffusely reflected optical return signal RLT and convert that into an electric current signal for transmission.

The signal processing unit 15 is connected to the photodetector unit 14 and configured to generate a sensing information based on the diffusely reflected optical return signal RLT in an electric current signal from receiving. The signal processing unit 15 may be, for example, a programmable logic controller (PLC), a central process unit (CPU), a micro control unit (MCU), a field programmable gate array (FPGA), or a system on chip (SoC), etc. Here is not intended to be limiting. The signal processing unit 15 may receive the diffusely reflected optical return signal RLT and obtain a distance information or other sensing information through direct time-of-flight (dTOF) or indirect time-of-flight (iTOF).

The light-emitting unit 11 of the optical phased array chip 1 of the embodiment may generate the optical emission signal LT. The beam-splitting unit 12 may receive and transmit the optical emission signal LT to the optical antenna unit 13. The optical antenna unit 13 may emit the optical emission signal LT. The object to be measured O is illuminated by the optical emission signal LT to form the diffusely reflected optical return signal RLT. The optical antenna unit 13 may receive the diffusely reflected optical return signal RLT. The beam-splitting unit 12 receives and transmits the diffusely reflected optical return signal RLT to the photodetector unit 14. The photodetector unit 14 receives and transmits the diffusely reflected optical return signal RLT to the signal processing unit 15. The signal processing unit 15 generates the distance information and other sensing information based on the diffusely reflected optical return signal RLT. As a result, the optical antenna unit 13 may emit the optical emission signal LT and receive the diffusely reflected optical return signal RLT.

On the other hand, the optical phased array in the related-art only has the function of emitting signals, while LiDAR requires a receiving unit in addition. The receiving unit includes a lens component and a light-sensitive element. Since the lens component utilizes geometric optics technology, the size of each lens of the lens component is much greater than the wavelength of the optical emission signal, thus, the lens component occupies a larger volume and increases the manufacturing cost.

In summary, the beam-splitting unit 12 of the optical phased array chip 1 of the embodiment may have a plurality of ports, respectively connected to the light-emitting unit 11, the optical antenna unit 13, and the photodetector unit 14 to simultaneously transmit and receive a signal to obtain the distance information of the object to be measured. Since the optical phased array chip 1 of the embodiment achieves the effect of receiving light by skipping the lens component and the light-sensitive element, the size of the device and the manufacturing cost may be reduced.

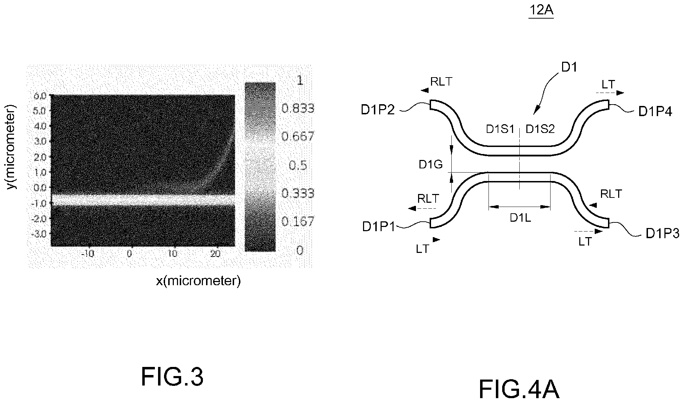

Figure 3 is a schematic diagram of the effect of the beam-splitting of the directional coupling unit of the beam-splitting unit of the optical phased array chip in accordance with the present disclosure. Figure 4A is a schematic diagram of an embodiment of the beam-splitting unit of the optical phased array chip in accordance with the present disclosure. Please refer to Figure 1, Figure 3, and Figure 4A, in some embodiments, a beam-splitting unit 12A includes a first directional coupling unit D1. A first side D1S1 of the first directional coupling unit D1 is connected (for example, through an optical waveguide) to the light-emitting unit 11 and the photodetector unit 14, and a second side D1S2 of the first directional coupling unit D1 is connected (for example, through an optical waveguide) to the optical antenna unit 13. The first side D1S1 and the second side D1S2 are opposite sides of the first directional coupling unit D1. The first directional coupling unit D1 may include, for example, a first port D1P1 arranged at the first side D1S1 of the first directional coupling unit D1 and connected (for example, through an optical waveguide) to the light-emitting unit 11. The first directional coupling unit D1 may, for example, include a second port D1P2 arranged at the first side D1S1 and connected (for example, through an optical waveguide) to the photodetector unit 14. The first directional coupling unit D1 may, for example, include a third port D1P3 arranged at the second side D1S2 and connected (for example, through an optical waveguide) to the third port D1P3 and the optical antenna unit 13. Of course, the splitter tree may be disposed between the first directional coupling unit D1 and the optical antenna unit 13. Here is not intended to be limiting.

In other embodiments, the first directional coupling unit D1 may include a fourth port D1P4 connected to other photodetector units (not shown in figures). The first directional coupling unit D1 may, for example, receive the optical emission signal LT from the first port D1P1, split the optical emission signal LT, and transmit that from the third port D1P3 and the fourth port D1P4. The first directional coupling unit D1 may adjust a splitting ratio through a length D1L and a distance D1G. When the length D1L of the first directional coupling unit D1 is increased, the optical emission signal LT incident from the first port D1P1 of the first directional coupling unit D1 may be coupled to the fourth port D1P4 in a higher ratio. As shown in Figure 3, when the distance D1G is increased, the optical emission signal LT incident from the first port D1P1 of the first directional coupling unit D1 may be coupled to the fourth port D1P4 in a lower ratio. The first directional coupling unit D1 may, for example, receive the diffusely reflected optical return signal RLT from the third port D1P3, split the diffusely reflected optical return signal RLT, and transmit that from the first port D1P1 and the second port D1P2.

In summary, the beam-splitting unit 12A of the optical phased array chip 1 of the embodiment may have equal to or more than three ports respectively connected to the light-emitting unit 11, the optical antenna unit 13, the photodetector unit 14, and other photodetector units to monitor the energy of the optical emission signal LT and the diffusely reflected optical return signal RLT.

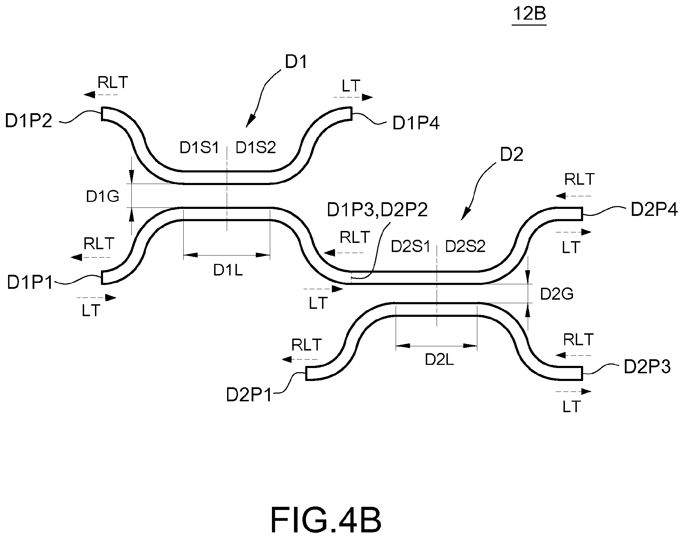

Figure 4B is a schematic diagram of a variation of the beam-splitting unit of the optical phased array chip in accordance with the present disclosure. Please refer to Figure 1, Figure 3, and Figure 4B, in some embodiments, a beam-splitting unit 12B includes a first directional coupling unit D1 and a second directional coupling unit D2.

A first side D1S1 of the first directional coupling unit D1 is connected (for example, through an optical waveguide) to the light-emitting unit 11. The first side D1S1 of the first directional coupling unit D1 and the second side D1S2 of the first directional coupling unit D1 are opposite sides of the first directional coupling unit D1. The first directional coupling unit D1 of the beam-splitting unit 12B is similar to the first directional coupling unit D1 of the beam-splitting unit 12A (as shown in Figure 4A). Here is omitted for brevity.

A first side D2S1 of the second directional coupling unit D2 is connected (for example, through an optical waveguide) to a second side D1S2 of the first directional coupling unit D1 and a second side D2S2 of the second directional coupling unit D2 is connected (for example, through an optical waveguide) to the optical antenna unit 13. The first side D2S1 of the second directional coupling unit D2 and the second side D2S2 of the second directional coupling unit D2 are opposite sides of the second directional coupling unit D2. The first side D1S1 of the first directional coupling unit D1 or the first side D2S1 of the second directional coupling unit D2 is connected (for example, through an optical waveguide) to the photodetector unit 14. The second directional coupling unit D2 may include, for example, a first port D2P1 arranged at the first side D2S1 of the second directional coupling unit D2. The second directional coupling unit D2 may, for example, include a second port D2P2 arranged at the first side D2S1 and connected (for example, through an optical waveguide) to the third port D1P3 of the first directional coupling unit D1. The second directional coupling unit D2 may, for example, include a third port D2P3 arranged at the second side D2S2 and connected (for example, through an optical waveguide) to the optical antenna unit 13. The second port D1P2 of the first directional coupling unit D1 or the first port D2P1 of the second directional coupling unit D2 is connected (for example, through an optical waveguide) to the photodetector unit 14. Of course, a splitter tree may be disposed between the second directional coupling unit D2 and the optical antenna unit 13. Here is not intended to be limiting.

In other embodiments, the second directional coupling unit D2 may include a fourth port D2P4 connected to other photodetector units (not shown in figures). The first directional coupling unit D1 may, for example, receive the optical emission signal LT from the first port D1P1, split the optical emission signal LT, and transmit that from the third port D1P3 and the fourth port D1P4. As shown in Figure 3, the second directional coupling unit D2 may adjust a splitting ratio through a length D2L and a distance D2G. The second directional coupling unit D2 may, for example, receive the optical emission signal LT from the second port D2P2, split the optical emission signal LT, and transmit that from the third port D2P3 and the fourth port D2P4. The second directional coupling unit D2 may, for example, receive the diffusely reflected optical return signal RLT from the third port D2P3, split the diffusely reflected optical return signal RLT, and transmit that from the first port D2P1 and the second port D2P2. The first directional coupling unit D1 may, for example, receive the diffusely reflected optical return signal RLT from the third port D1P3, split the diffusely reflected optical return signal RLT, and transmit that from the first port D1P1 and the second port D1P2.

In summary, the beam-splitting unit 12B of the optical phased array chip 1 of the embodiment may have equal to or more than three ports respectively connected to the light-emitting unit 11, the optical antenna unit 13, the photodetector unit 14, and other photodetector units to monitor the energy of the optical emission signal LT and the diffusely reflected optical return signal RLT. Moreover, the beam-splitting unit 12B may be designed in different ways based on different requirements.

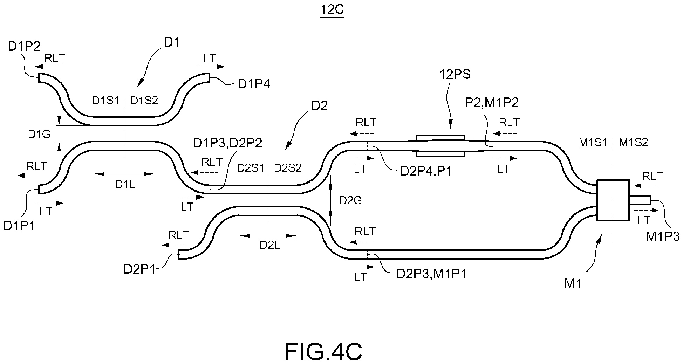

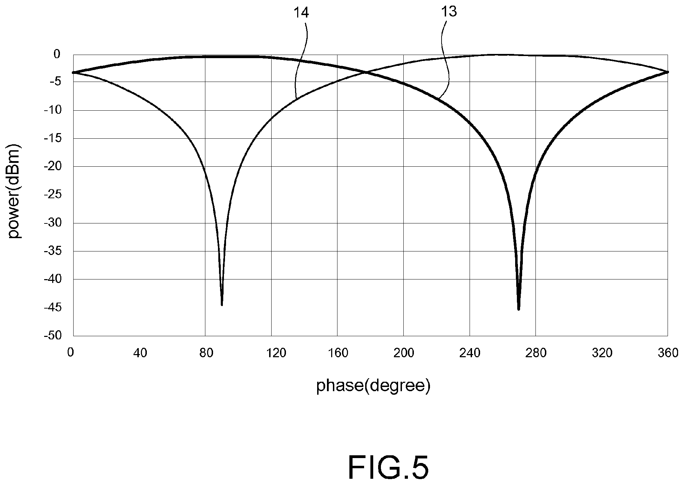

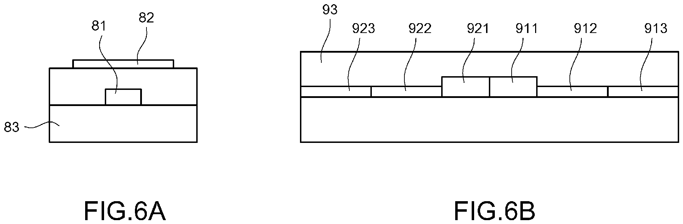

Figure 4C is a schematic diagram of another variation of the beam-splitting unit of the optical phased array chip in accordance with the present disclosure. Figure 5 is a schematic diagram of the effect of the optical phase shifting unit of the beam-splitting unit of the optical phased array chip in accordance with the present disclosure. Figure 6A is a schematic diagram of an embodiment of the optical phase shifting unit of the beam-splitting unit of the optical phased array chip in accordance with the present disclosure. Figure 6B is a schematic diagram of another embodiment of the optical phase shifting unit of the beam-splitting unit of the optical phased array chip in accordance with the present disclosure. Please refer to Figure 1, Figure 4C, Figure 5, Figure 6A, and Figure 6B, in some embodiments, the beam-splitting unit 12C includes a first directional coupling unit D1, a second directional coupling unit D2, an optical phase shifting unit 12PS, and a first multimode interference unit M1. The first directional coupling unit D1 (as shown in Figure 4A) and the second directional coupling unit D2 (as shown in Figure 4B) are similar to the mentioned embodiment. Here is omitted for brevity.

The optical phase shifting unit 12PS includes a first port P1 and a second port P2. The first port P1 is connected, through an optical waveguide, to a port (for example, a fourth port D2P4) of the second side D2S2 of the second directional coupling unit D2. The second port P2 is connected (for example, through an optical waveguide) to the optical antenna unit 13.

The optical phase shifting unit 12PS may, for example, include a thermo-optics phase shifter heated by electrodes or a free-carrier-depletion-based phase shifter made by semiconductor doping to adjust the phase of the optical emission signal LT or the diffusely reflected optical return signal RLT to make the power of the optical emission signal LT and the power of the diffusely reflected optical return signal RLT be at a higher energy level simultaneously. As shown in Figure 6A, the thermo-optics phase shifter may, for example, include a silicon unit 81 or a nitride silicon unit, a heating unit 82, and a cladding 83. As shown in Figure 6B, the free-carrier-depletion-based phase shifter may, for example, include a low-concentration p-type semiconductor 911, a medium-concentration p-type semiconductor 912, a high-concentration p-type semiconductor 913, a low-concentration n-type semiconductor 921, a medium-concentration n-type semiconductor 922, a high-concentration n-type semiconductor 923, and a cladding 93.

The first multimode interference unit M1 may, for example, include a first port M1P1 arranged at a first side M151 of the first multimode interference unit M1 and connected (for example, through an optical waveguide) to the third port D2P3 of the second directional coupling unit D2. The first multimode interference unit M1 may, for example, include a second port M1P2 arranged at the first side D1S1 of the first multimode interference unit M1 and connected (for example, through an optical waveguide) to the second port P2 of the optical phase shifting unit 12PS of the beam-splitting unit 12C. The first multimode interference unit M1 may, for example, include a third port M1P3 arranged at the second side M1S2 and connected (for example, through an optical waveguide) to the optical antenna unit 13. Of course, a splitter tree may be disposed between the first multimode interference unit M1 and the optical antenna unit 13. Here is not intended to be limiting.

The first directional coupling unit D1 may, for example, receive the optical emission signal LT from the first port D1P1, split the optical emission signal LT, and transmit that from the third port D1P3 and the fourth port D1P4. The second directional coupling unit D2 may, for example, receive the optical emission signal LT from the second port D2P2, split the optical emission signal LT, and transmit that from the third port D2P3 and the fourth port D2P4. The optical phase shifting unit 12PS may, for example, receive the optical emission signal LT from the first port P1, adjust a phase of the optical emission signal LT, and then transmit that from the second port P2. The first multimode interference unit M1 may, for example, receive the optical emission signal LT from the first port M1P1 and the second port M1P2, and transmit the optical emission signal LT from the third port M1P3 to the optical antenna unit 13. The first multimode interference unit M1 may, for example, receive the diffusely reflected optical return signal RLT from the third port M1P3. The subsequent transmission manner may be deduced from the mentioned embodiments. Here is omitted for brevity.

In summary, the beam-splitting unit 12C of the optical phased array chip 1 of the embodiment may have equal to or more than three ports respectively connected to the light-emitting unit 11, the optical antenna unit 13, the photodetector unit 14, and other photodetector units to monitor the energy of the optical emission signal LT and the diffusely reflected optical return signal RLT. In addition, the beam-splitting unit 1 of the optical phased array chip 12C of the embodiment may have the optical phase shifting unit 12PS to adjust the phase of the optical emission signal LT or the diffusely reflected optical return signal RLT to make the power of the optical emission signal LT and the power of the diffusely reflected optical return signal RLT be at a higher energy level simultaneously. Moreover, the beam-splitting unit 12C may be designed in different ways based on different requirements.

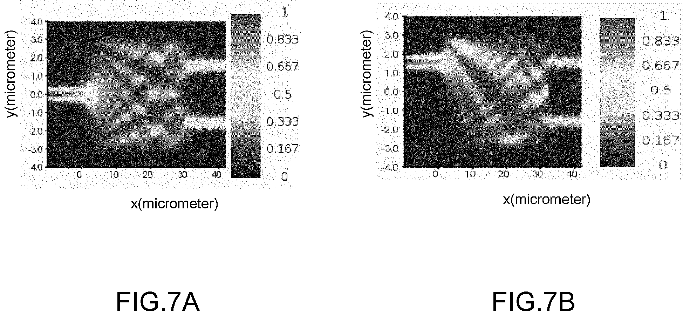

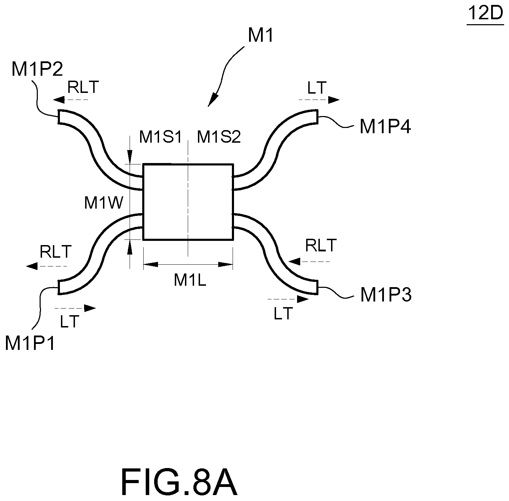

Figure 7A is a schematic diagram of an embodiment of the effect of the beam-splitting of the multimode interference unit of the beam-splitting unit of the optical phased array chip in accordance with the present disclosure. Figure 7B is a schematic diagram of another embodiment of the effect of the beam-splitting of the multimode interference unit of the beam-splitting unit of the optical phased array chip in accordance with the present disclosure. Figure 8A is a schematic diagram of another variation of the beam-splitting unit of the optical phased array chip in accordance with the present disclosure. Please refer to Figure 1, Figure 7A, Figure 7B, and Figure 8A, in some embodiments, the beam-splitting unit 12D includes a first multimode interference unit M1. A first side M151 of the first multimode interference unit M1 is connected (for example, through an optical waveguide) to the light-emitting unit 11 and the photodetector unit 14, and a second side M1S2 of the first multimode interference unit M1 is connected (for example, through an optical waveguide) to the optical antenna unit 13. The first side M1S1 and the second side M1S2 are opposite sides of the first multimode interference unit M1. The first multimode interference unit M1 may include, for example, a first port M1P1 arranged at the first side M151 of the first multimode interference unit M1 and connected (for example, through an optical waveguide) to the light-emitting unit 11. The first multimode interference unit M1 may, for example, include a second port M1P2 arranged at the first side M1S1 and connected (for example, through an optical waveguide) to the photodetector unit 14. The first multimode interference unit M1 may, for example, include a third port M1P3 arranged at the second side M1S2 and connected (for example, through an optical waveguide) to the third port M1P3 and the optical antenna unit 13. Of course, a splitter tree may be disposed between the first multimode interference unit M1 and the optical antenna unit 13. Here is not intended to be limiting.

In other embodiments, the first multimode interference unit M1 may include a fourth port M1P4 connected to other photodetector units (not shown in figures). As shown in Figure 7A and Figure 7B, the first multimode interference unit M1 may change the splitting ratio by adjusting a length M1L, a width M1W, and the position of the first port M1P1, the second port M1P2, the third port M1P3, and the fourth port M1P4. An optical path formed by the first multimode interference unit M1 is similar to the optical path formed by the first directional coupling unit D1 (as shown in Figure 4A). Here is omitted for brevity.

In summary, the beam-splitting unit 12D of the optical phased array chip 1 of the embodiment may have equal to or more than three ports respectively connected to the light-emitting unit 11, the optical antenna unit 13, the photodetector unit 14, and other photodetector units to monitor the energy of the optical emission signal LT and the diffusely reflected optical return signal RLT.

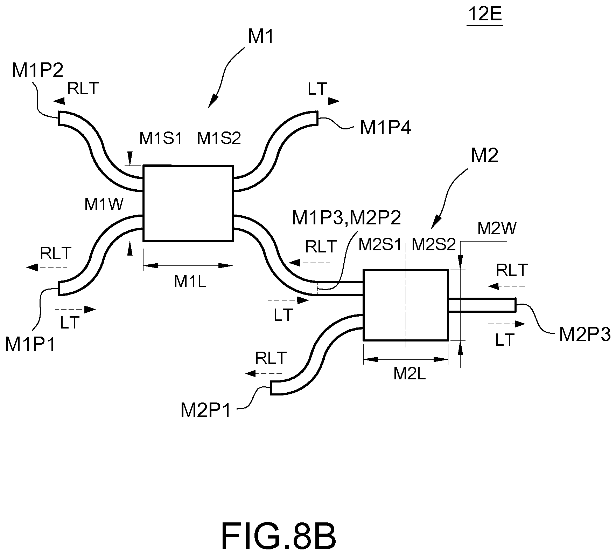

Figure 8B is a schematic diagram of another variation of the beam-splitting unit of the optical phased array chip in accordance with the present disclosure. Please refer to Figure 1 and Figure 8B, in some embodiments, a beam-splitting unit 12E includes a first multimode interference unit M1, and a second multimode interference unit M2.

The first side M1S1 of the first multimode interference unit M1 is connected (for example, through an optical waveguide) to the light-emitting unit 11. The first side M151 of the first multimode interference unit M1 and the second side M1S2 of the first multimode interference unit M1 are opposite sides of the first multimode interference unit M1. This first multimode interference unit M1 is similar to the first multimode interference unit M1 (shown in Figure 8A). Here is omitted for brevity.

The first side M2S1 of the second multimode interference unit M2 is connected (for example, through an optical waveguide) to a second side M1S2 of the first multimode interference unit M1, and a second side M2S2 of the second multimode interference unit M2 is connected (for example, through an optical waveguide) to the optical antenna unit 13. The first side M2S1 of the second multimode interference unit M2 and the second side M2S2 of the second multimode interference unit M2 are opposite sides of the second multimode interference unit M2. The first side M1S1 of the first multimode interference unit M1 or the first side M2S1 of the second multimode interference unit M2 is connected (for example, through an optical waveguide) to the photodetector unit 14. The second multimode interference unit M2 may include, for example, a first port M2P1 arranged at the first side M2S1 of the second multimode interference unit M2. The second multimode interference unit M2 may, for example, include a second port M2P2 arranged at the first side M2S1 and connected (for example, through an optical waveguide) to the third port M1P3 of the first multimode interference unit M1. The second multimode interference unit M2 may, for example, include a third port M2P3 arranged at the second side M2S2 and connected (for example, through an optical waveguide) to the optical antenna unit 13. The second port M1P2 of the first multimode interference unit M1 or the first port M2P1 of the second multimode interference unit M2 is connected (for example, through an optical waveguide) to the photodetector unit 14. Of course, a splitter tree may be disposed between the second multimode interference unit M2 and the optical antenna unit 13. Here is not intended to be limiting.

In other embodiments, the second multimode interference unit M2 may include a fourth port (not shown in figures). Similarly, the second multimode interference unit M2 may change the splitting ratio (as shown in Figure 7A and Figure 7B) by adjusting a length M2L, a width M2W, and the position of the first port M2P1, the second port M2P2, the third port M2P3, and the fourth port (not shown in figures). An optical path formed by the combination of the first multimode interference unit M1 and the second multimode interference unit M2 is similar to the optical path formed by the combination of the first directional coupling unit D1 and the second directional coupling unit D2. Here is omitted for brevity.

In summary, the beam-splitting unit 12E of the optical phased array chip 1 of the embodiment may have equal to or more than three ports respectively connected to the light-emitting unit 11, the optical antenna unit 13, the photodetector unit 14, and other photodetector units to monitor the energy of the optical emission signal LT and the diffusely reflected optical return signal RLT. Moreover, the beam-splitting unit 12E may be designed in different ways based on different requirements.

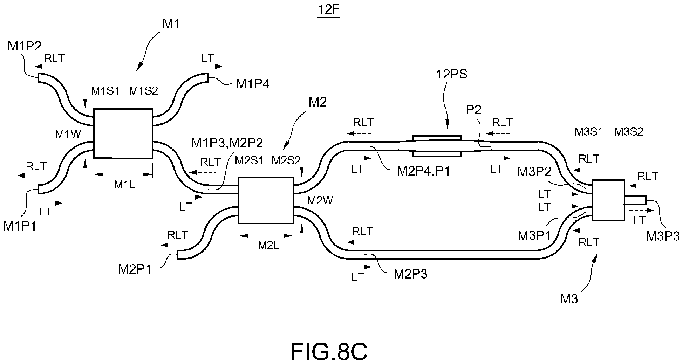

Figure 8C is a schematic diagram of another variation of the beam-splitting unit of the optical phased array chip in accordance with the present disclosure. Please refer to Figure 1 and Figure 8C, a beam-splitting unit 12F includes a first multimode interference unit M1, a second multimode interference unit M2, an optical phase shifting unit 12PS, and a third multimode interference unit M3. The first multimode interference unit M1 (as shown in Figure 8A) and the second multimode interference unit M2 (as shown in Figure 8B) are similar to the mentioned embodiment. Here is omitted for brevity.

The optical phase shifting unit 12PS includes a first port P1 and a second port P2. The first port P1 is connected (for example, through an optical waveguide) to a port (for example, a fourth port (not shown in figures)) of the second side M2S2 of the second multimode interference unit M2, and the second port P2 is connected (for example, through an optical waveguide) to the optical antenna unit 13.

The third multimode interference unit M3 may, for example, include a first port M3P1 arranged at the first side M3S1 of the third multimode interference unit M3 and connected (for example, through an optical waveguide) to the third port M2P3 of the second multimode interference unit M2. The third multimode interference unit M3 may, for example, include a second port M3P2 arranged at the first side M3S1 of the third multimode interference unit M3 and connected (for example, through an optical waveguide) to the second port P2 of the optical phase shifting unit 12PS of the beam-splitting unit 12F. The third multimode interference unit M3 may, for example, include a third port M3P3 arranged at the second side M3S2 and connected (for example, through an optical waveguide) to the optical antenna unit 13. Of course, a splitter tree may be disposed between the third multimode interference unit M3 and the optical antenna unit 13. Here is not intended to be limiting.

An optical path formed by the combination of the first multimode interference unit M1, the second multimode interference unit M2, the optical phase shifting unit 12PS, and the third multimode interference unit M3 is similar to the optical path formed by the combination (as shown in Figure 4C) of the first directional coupling unit D1, the second directional coupling unit D2, the optical phase shifting unit 12PS, and the first multimode interference unit M1. Here is omitted for brevity.

In summary, the beam-splitting unit 12F of the optical phased array chip 1 of the embodiment may have equal to or more than three ports respectively connected to the light-emitting unit 11, the optical antenna unit 13, the photodetector unit 14, and other photodetector units to monitor the energy of the optical emission signal LT and the diffusely reflected optical return signal RLT. In addition, the beam-splitting unit 1 of the optical phased array chip 12F of the embodiment may have the optical phase shifting unit 12PS to adjust the phase of the optical emission signal LT or the diffusely reflected optical return signal RLT to make the power of the optical emission signal LT and the power of the diffusely reflected optical return signal RLT be at a higher energy level simultaneously. Moreover, the beam-splitting unit 12F may be designed in different ways based on different requirements.

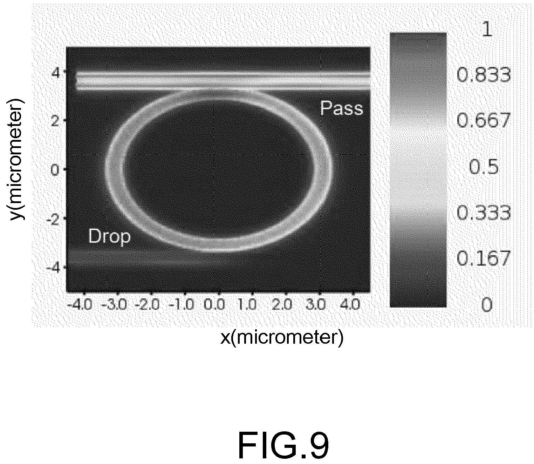

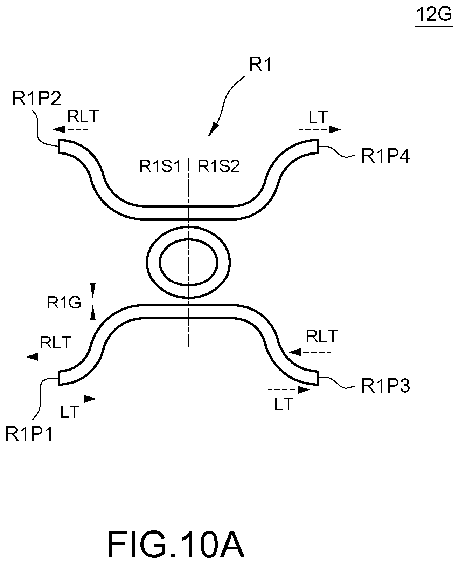

Figure 9 is a schematic diagram of the effect of the beam-splitting of the ring resonance unit of the beam-splitting unit of the optical phased array chip in accordance with the present disclosure. Figure 10A is a schematic diagram of another variation of the beam-splitting unit of the optical phased array chip in accordance with the present disclosure. Please refer to Figure 1, Figure 9, and Figure 10A, in some embodiments, a beam-splitting unit 12G includes a first ring resonance unit R1. A first side R1S1 of the first ring resonance unit R1 is connected (for example, through an optical waveguide) to the light-emitting unit 11 and the photodetector unit 14, and a second side R1S2 of the first ring resonance unit R1 is connected (for example, through an optical waveguide) to the optical antenna unit 13. The first side R1S1 and the second side R1S2 are opposite sides of the first ring resonance unit R1. The first ring resonance unit R1 may include, for example, a first port R1P1 arranged at the first side R1S1 of the first ring resonance unit R1 and connected (for example, through an optical waveguide) to the light-emitting unit 11. The first ring resonance unit R1 may, for example, include a second port R1P2 arranged at the first side R1S1 and connected (for example, through an optical waveguide) to the photodetector unit 14. The first ring resonance unit R1 may, for example, include a third port R1P3 arranged at the second side R1S2 and connected (for example, through an optical waveguide) to the third port R1P3 and the optical antenna unit 13. Of course, a splitter tree may be disposed between the first ring resonance unit R1 and the optical antenna unit 13. Here is not intended to be limiting.

In other embodiments, the first ring resonance unit R1 may include a fourth port R1P4 connected to other photodetector units (not shown in figures). As shown in Figure 9, the first ring resonance unit R1 may adjust a splitting ratio through a distance R1G. An optical path formed by the first ring resonance unit R1 is similar to the optical path formed by the first directional coupling unit D1 (as shown in Figure 4A). Here is omitted for brevity.

In summary, the beam-splitting unit 12G of the optical phased array chip 1 of the embodiment may have equal to or more than three ports respectively connected to the light-emitting unit 11, the optical antenna unit 13, the photodetector unit 14, and other photodetector units to monitor the energy of the optical emission signal LT and the diffusely reflected optical return signal RLT.

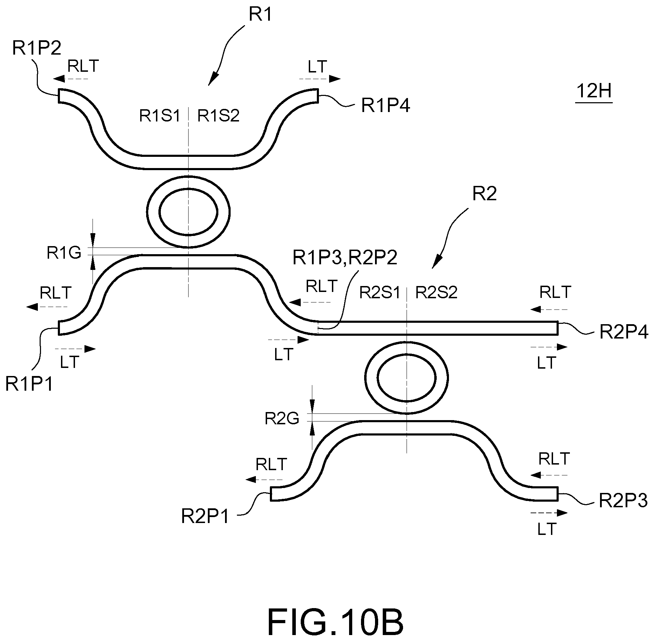

Figure 10B is a schematic diagram of another variation of the beam-splitting unit of the optical phased array chip in accordance with the present disclosure. Please refer to Figure 1 and Figure 10B, in some embodiments, a beam-splitting unit 12H includes a first ring resonance unit R1 and a second ring resonance unit R2.

A first side R1S1 of the first ring resonance unit R1 is connected (for example, through an optical waveguide) to the light-emitting unit 11. The first side R1S1 of the first ring resonance unit R1 and the second side R1S2 of the first ring resonance unit R1 are opposite sides of the first ring resonance unit R1. This first ring resonance unit R1 is similar to the first ring resonance unit R1 (shown in Figure 10A). Here is omitted for brevity.

A first side R2S1 of the second ring resonance unit R2 is connected (for example, through an optical waveguide) to a second side R1S2 of the first ring resonance unit R1, and a second side R2S2 of the second ring resonance unit R2 is connected (for example, through an optical waveguide) to the optical antenna unit 13. The first side R2S1 of the second ring resonance unit R2 and the second side R2S2 of the second ring resonance unit R2 are opposite sides of the second ring resonance unit R2. The first side R1S1 of the first ring resonance unit R1 or the first side R2S1 of the second ring resonance unit R2 is connected (for example, through an optical waveguide) to the photodetector unit 14. The second ring resonance unit R2 may include, for example, a first port R2P1 arranged at the first side R2S1 of the second ring resonance unit R2. The second ring resonance unit R2 may, for example, include a second port R2P2 arranged at the first side R2S1 and connected (for example, through an optical waveguide) to the third port R1P3 of the first ring resonance unit R1. The second ring resonance unit R2 may, for example, include a third port R2P3 arranged at the second side R2S2 and connected (for example, through an optical waveguide) to the optical antenna unit 13. The second port R1P2 of the second ring resonance unit R2 or the first port R2P1 of the second ring resonance unit R2 is connected (for example, through an optical waveguide) to the photodetector unit 14. Of course, a splitter tree may be disposed between the second ring resonance unit R2 and the optical antenna unit 13. Here is not intended to be limiting.

In other embodiments, the second ring resonance unit R2 may include a fourth port R2P4. Similarly, the second ring resonance unit R2 may adjust a splitting ratio through a distance R2G. An optical path formed by the combination of the first ring resonance unit R1 and the second ring resonance unit R2 is similar to the optical path formed by the combination (as shown in Figure 4B) of the first directional coupling unit D1 and the second directional coupling unit D2. Here is omitted for brevity.

In summary, the beam-splitting unit 12H of the optical phased array chip 1 of the embodiment may have equal to or more than three ports respectively connected to the light-emitting unit 11, the optical antenna unit 13, the photodetector unit 14, and other photodetector units to monitor the energy of the optical emission signal LT and the diffusely reflected optical return signal RLT. Moreover, the beam-splitting unit 12H may be designed in different ways based on different requirements.

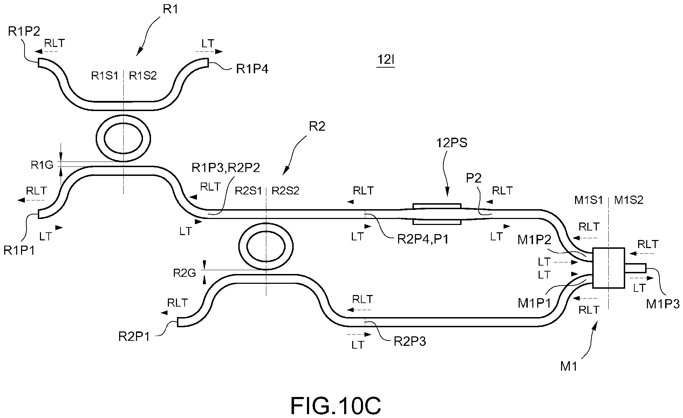

Figure 10C is a schematic diagram of another variation of the beam-splitting unit of the optical phased array chip in accordance with the present disclosure. Please refer to Figure 1 and Figure 10C, a beam-splitting unit 12I includes a first ring resonance unit R1, a second ring resonance unit R2, an optical phase shifting unit 12PS, and a first multimode interference unit M1. The first ring resonance unit R1 (as shown in Figure 10A) and the second ring resonance unit R2 (as shown in Figure 10B) are similar to the mentioned embodiments. Here is omitted for brevity.

The optical phase shifting unit 12PS includes a first port P1 and a second port P2. The first port P1 is connected (for example, through an optical waveguide) to a port (for example, a fourth port R2P4) of the second side R2S2 of the second ring resonance unit R2, and the second port P2 is connected (for example, through an optical waveguide) to the optical antenna unit 13.

The first multimode interference unit M1 includes a first port M1P1 arranged at a first side M1S1 of the first multimode interference unit M1 and connected (for example, through an optical waveguide) to the third port R2P3 of the second ring resonance unit R2. The first multimode interference unit M1 includes a second port M1P2 arranged at the first side R1S1 of the first multimode interference unit M1 and connected (for example, through an optical waveguide) to the second port P2 of the optical phase shifting unit 12PS of the beam-splitting unit 12I. The first multimode interference unit M1 includes a third port M1P3 arranged at the second side M1S2 and connected (for example, through an optical waveguide) to the optical antenna unit 13. Of course, a splitter tree may be disposed between the first multimode interference unit M1 and the optical antenna unit 13. Here is not intended to be limiting.

An optical path formed by the combination of the first ring resonance unit R1, the second ring resonance unit R2, the optical phase shifting unit 12PS, and the first multimode interference unit M1 is similar to the optical path formed by the combination of the first directional coupling unit D1, the second directional coupling unit D2, the optical phase shifting unit 12PS, and the first multimode interference unit M1. Here is omitted for brevity.

In summary, the beam-splitting unit 12F of the optical phased array chip 1 of the embodiment may have equal to or more than three ports respectively connected to the light-emitting unit 11, the optical antenna unit 13, the photodetector unit 14, and other photodetector units to monitor the energy of the optical emission signal LT and the diffusely reflected optical return signal RLT. In addition, the beam-splitting unit 1 of the optical phased array chip 12F of the embodiment may have the optical phase shifting unit 12PS to adjust the phase of the optical emission signal LT or the diffusely reflected optical return signal RLT to make the power of the optical emission signal LT and the power of the diffusely reflected optical return signal RLT be at a higher energy level simultaneously. Moreover, the beam-splitting unit 12F may be designed in different ways based on different requirements.

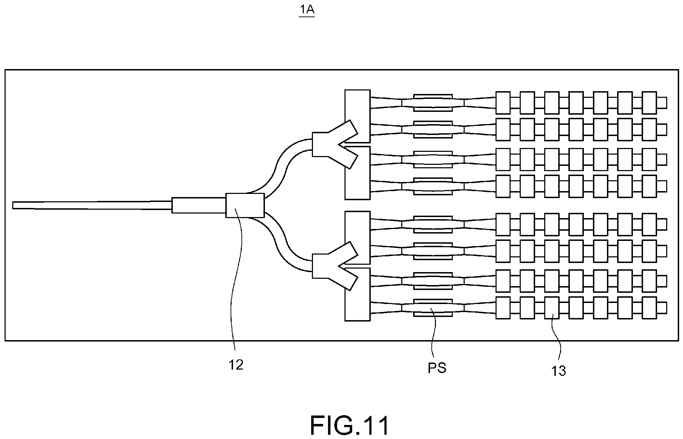

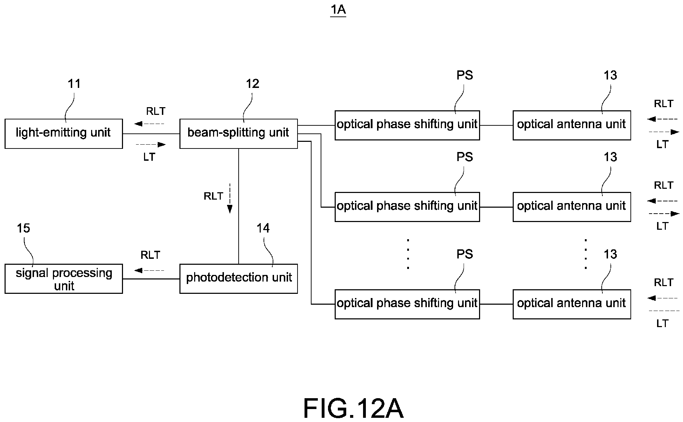

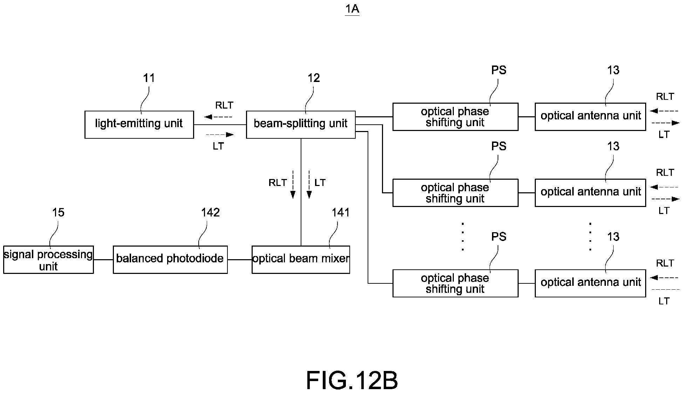

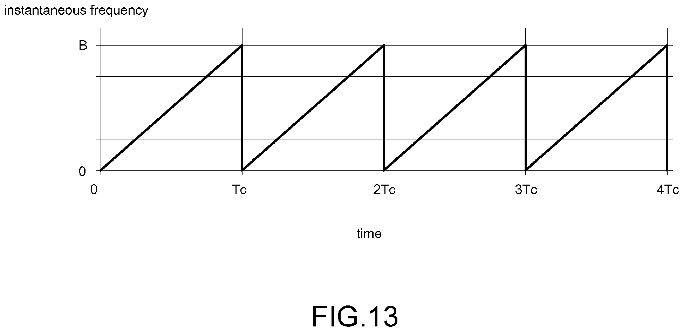

Figure 11 is a schematic diagram of the optical phased array chip in accordance with a second embodiment of the present disclosure. Figure 12A is a block diagram of the optical phased array chip in accordance with a second embodiment of the present disclosure. Figure 12B is a block diagram of a variation of the optical phased array chip in accordance with a second embodiment of the present disclosure. Figure 13 is a schematic diagram of a variation of the frequency-modulated continuous wave of the optical emission signal in accordance with a second embodiment of the present disclosure. Please refer to Figure 4C, Figure 11, Figure 12A, Figure 12B, and Figure 13, an optical phased array chip 1A of the second embodiment includes a light-emitting unit 11, a plurality of optical antenna units 13, a beam-splitting unit 12, a photodetector unit 14, and a signal processing unit 15. The light-emitting unit 11, the beam-splitting unit 12, the photodetector unit 14, and the signal processing unit 15 are similar to the first embodiment. Here is omitted for brevity. Of course, a splitter tree may be disposed between the beam-splitting unit 12 and the optical antenna unit 13. Here is not intended to be limiting.

The optical emission signals LT emitted by each of the optical antenna units 13 may form diffraction and interference with each other and form a light spot in the far field.

In some embodiments, the optical phased array chip 1A may further include a plurality of optical phase shifting units PS. Each of the optical phase shifting units PS is connected (for example, through an optical waveguide) to each of the optical antenna units 13, and configured to receive, phase shift, and transmit the optical emission signal LT. An optical phase shifting unit PS is similar to the optical phase shifting unit 12PS. The optical phase shifting unit 12PS of the beam-splitting unit 12 of the first embodiment may be adjusted to a specific phase shift angle during the design stage. When the optical phased array chip 1A emits the optical emission signal LT, the phase shift angle of the optical phase shifting unit 12PS remains constant over time. Each of the optical phase shifting units PS of the second embodiment may adjust different phase shift angles over time to make the optical emission signal LT form constructive interference at different positions. As a result, a light spot is formed at different far-field positions at different times, achieving the effect of spatial scanning.

In some embodiments, the optical phased array chip 1A may further include a plurality of phase detectors DT1. Each of the phase detectors DT1 is connected (for example, through an optical waveguide) to each of the optical antenna units 13, and receives the optical emission signal LT. As a result, the designer may obtain the phase of the optical emission signal LT at the far field position from each of the optical antenna units 13 through the phase detectors DT1 to optimize the phase shift angle of optical phase shifting units PS and make the optical emission signal LT to form a more ideal spot in the far field.

As shown in Figure 12B and Figure 13, in some embodiments, the photodetector unit 14 may include an optical beam mixer 141 and a balanced photodiode 142. The optical emission signal LT may be a frequency-modulated continuous-wave (FMCW). When a moving object to be measured O is illuminated by the optical emission signal LT, the frequency of the diffusely reflected optical return signal RLT may change with the optical emission signal LT due to the Doppler effect. The optical beam mixer 141 and the balanced photodiode 142 may mix the diffusely reflected optical return signal RLT and the optical emission signal LT into a beat signal. The signal processing unit 15 may obtain the distance information and the speed information through the beat signal.

It should be noted that the beam-splitting unit 12 of the second embodiment may also include a directional coupling unit (such as Figure 4A to Figure 4C), a multimode interference unit (such as Figure 8A to Figure 8C), a ring resonance unit (such as Figure 10A to Figure 10C) and/or combinations thereof described in the mentioned embodiments. Here is omitted for brevity. Here is not intended to be limiting.

In summary, the optical phased array chip 1A of this embodiment may have the functions of the optical phased array chip 1 of the first embodiment. Further, the optical antenna units 13 and the optical phase shifting units PS of the optical phased array chip 1A of this embodiment may form a light spot at different far-field positions at different times to achieve the effect of space scanning. Moreover, each of the phase detectors DT1 of the optical phased array chip 1A of the present disclosure is connected (for example, through an optical waveguide) to each of the optical antenna units 13. The designer may obtain the phase of the optical emission signal LT at the far field position from each of the optical antenna units 13 through the phase detectors DT1 to optimize the phase shift angle of optical phase shifting units PS and make the optical emission signal LT to form a more ideal spot in the far field to increase a sensing accuracy. Moreover, the photodetector unit 14 of the optical phased array chip 1A of the present disclosure includes an optical beam mixer 141 and a balanced photodiode 142 to obtain additional speed information of the object to be measured O.

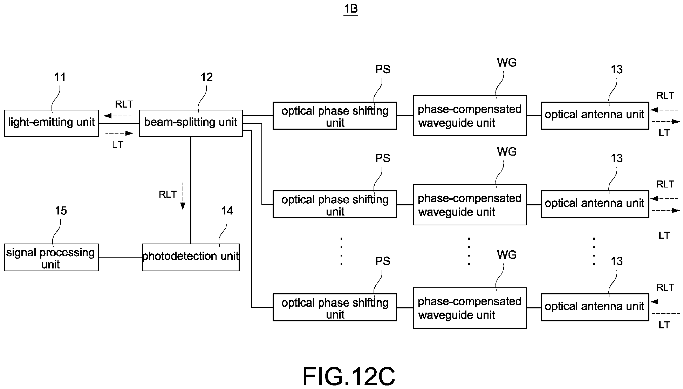

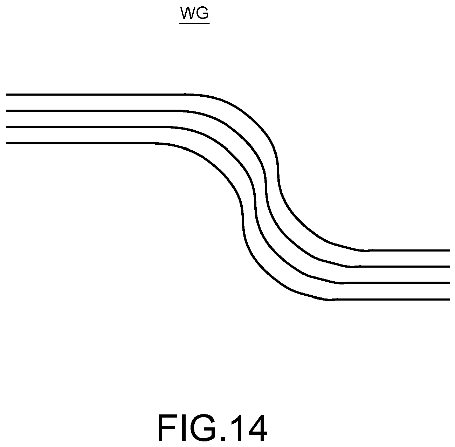

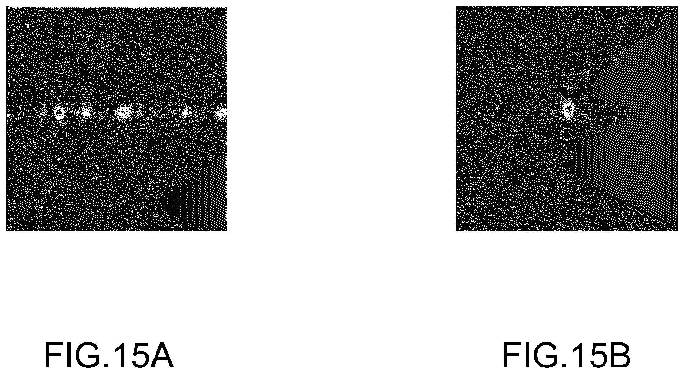

Figure 12C is a block diagram of another variation of the optical phased array chip in accordance with a second embodiment of the present disclosure. Figure 14 is a schematic diagram of the phase-compensated waveguide unit of the optical phased array chip in accordance with the present disclosure. Figure 15A is a schematic diagram of the far field spot of the optical phased array chip in accordance with the present disclosure. Figure 15B is a schematic diagram of the compensation effect of the phase-compensated waveguide unit of the optical phased array chip in accordance with the present disclosure. Please refer to Figure 12C, Figure 14, Figure 15A, and Figure 15B, in some embodiments, an optical phased array chip 1B may further include a plurality of phase-compensated waveguide units WG. Each of the phase-compensated waveguide units WG is connected (for example, through an optical waveguide) to each of the optical phase shifting units PS and each of the optical antenna units 13, and configured to receive and transmit the optical emission signal LT. Each of the phase-compensated waveguide units WG performs a phase compensation on the optical emission signal LT.

The actual optical phased array chip may not be as ideal as the designed optical phased array chip and the optical antenna units 13 may not emit the optical emission signal LT of substantially spherical waves. As a result, the light spot formed by the optical antenna units 13 in the far field may not nearly be a single point (as shown in Figure 15A). The phase-compensated waveguide units WG may, for example, confine the light to be transmitted in the phase-compensated waveguide units WG through total reflection. Each of the phase-compensated waveguide units WG may include a high-refractive index core and a low-refractive-index cladding. Since the wavelength of the optical emission signal LT is close to the structural dimensions of the phase-compensated waveguide units WG, the phase of the optical emission signal LT may be changed by adjusting the length of the phase-compensated waveguide units WG. As shown in the following formula: $\Delta\varnothing = \frac{2\pi}{\lambda}\Delta n_{eff}L$, $\Delta\varnothing$ is the phase shift, $\lambda$ is the wavelength of the optical emission signal LT, $\Delta n_{eff}$ is the equivalent refractive index of the phase-compensated waveguide units WG, L is the length of the phase-compensated waveguide units WG.

The phase-compensated waveguide units WG may, for example, divide the optical emission signal LT into three parts and make the optical emission signal LT pass through three different lengths. The first part may, for example, increase the phase of the optical emission signal LT by 10 degrees. The second part may, for example, increase the phase of the optical emission signal LT by 20 degrees. The third part may, for example, increase the phase of the optical emission signal LT by 30 degrees. As a result, as shown in Figure 15B, each of the optical antenna units 13 may receive a phase-adjusted optical emission signal LT and emit the optical emission signal LT of substantially spherical waves to make the light spot formed by the optical antenna units 13 in the far field to nearly be a single point.

In summary, the optical phased array chip 1B of this embodiment may have the same functions as the optical phased array chip 1, 1A of the first and second embodiments. Further, the phase-compensated waveguide units WG of the optical phased array chip 1B of the present disclosure may form the light spot to nearly be a single point in the far field through the optical antenna units 13 to increase the sensing accuracy.

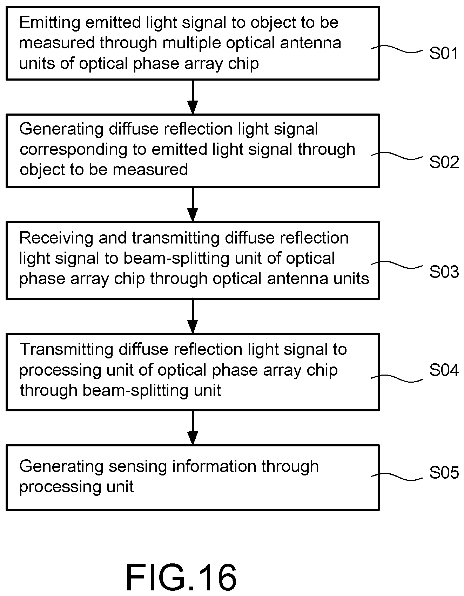

Figure 16 is a flowchart of the sensing method in accordance with an embodiment of the present disclosure. Please refer to Figure 16, the sensing method of the optical phased array chip of this embodiment includes step S01 to step S05. The step S01 is emitting optical emission signal to object to be measured through multiple optical antenna units of optical phased array chip. The step S02 is generating diffusely reflected optical return signal corresponding to optical emission signal through object to be measured. The step S03 is receiving and transmitting diffusely reflected optical return signal to beam-splitting unit of optical phased array chip through optical antenna units. The step S04 is transmitting diffusely reflected optical return signal to signal processing unit of optical phased array chip through beam-splitting unit. The step S05 is generating sensing information through signal processing unit. The sensing method of the optical phased array chip of this embodiment may be used for the optical phased array chip 1, 1A, 1B of the first embodiment or the second embodiment described above. Here is not intended to be limiting. The sensing method of the optical phased array chip of this embodiment may also be applied in other different optical phased array chips. The details of the sensing method have been described in the mentioned embodiments. Here is omitted for brevity.

In some embodiments, between the step S01 and the step S02, the sensing method may further include performing a phase compensation on the optical emission signal through a plurality of phase-compensated waveguide units of the optical phased array chip. The details of the sensing method have been described in the mentioned embodiments. Here is omitted for brevity. In some embodiments, the step S04 may further include transmitting the diffusely reflected optical return signal to a plurality of photodetector units of the optical phased array chip through the beam-splitting unit. The step S05 may further include generating a distance and a speed information based on the diffusely reflected optical return signal through one of the photodetector units through the signal processing unit; and generating a light energy information based on the diffusely reflected optical return signal through another one of the photodetector units through the signal processing unit. The details of the sensing method have been described in the mentioned embodiments. Here is omitted for brevity.

In summary, the optical phased array chip and the sensing method thereof of the present disclosure may simultaneously transmit and receive a signal to obtain the distance information and the speed information of the object to be measured. Since the optical phased array chip of the present disclosure achieves the effect of receiving light by skipping the lens component and the light-sensitive element, the size of the device and the manufacturing cost may be reduced.

Moreover, the beam-splitting unit of the optical phased array chip of the embodiment may have equal to or more than three ports respectively connected to the light-emitting unit, the optical antenna unit, the photodetector unit, and other photodetector units to monitor the energy of the optical emission signal and the diffusely reflected optical return signal. In addition, the beam-splitting unit of the optical phased array chip of the present disclosure may have the optical phase shifting unit to adjust the phase of the optical emission signal or the optical emission signal to make the power of the optical emission signal and the power of the diffusely reflected optical return signal be at a higher energy level simultaneously. Moreover, the beam-splitting unit may be designed in different ways based on different requirements.

Further, the optical phased array chip and the sensing method thereof of the present disclosure may form a light spot at different far-field positions at different times to achieve the effect of space scanning. Moreover, each of the phase detectors of the optical phased array chip of the present disclosure is connected (for example, through an optical waveguide) to each of the optical antenna units. The designer may obtain the phase of the optical emission signal at the far field position from each of the optical antenna units through the phase detectors to optimize the phase shift angle of optical phase shifting units and make the optical emission signal form a more ideal spot in the far field to increase a sensing accuracy. Moreover, the photodetector unit of the optical phased array chip of the present disclosure includes an optical beam mixer and a balanced photodiode to obtain additional speed information of the object to be measured. Further, the phase-compensated waveguide units of the optical phased array chip of the present disclosure may form the light spot to nearly be a single point in the far field through the optical antenna units to increase the sensing accuracy.

As used herein and not otherwise defined, the terms "substantially" and "approximately" are used to describe and account for small variations. When used in conjunction with an event or circumstance, the terms may refer to instances in which the event or circumstance occurs precisely as well as instances in which the event or circumstance occurs to a close approximation. For example, when used in conjunction with a numerical value, the terms may refer to a range of variation of less than or equal to ±10% of that numerical value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%.

**Claims**

1. An optical phased array chip (1), comprising:

    a light-emitting unit (11), configured to generate an optical emission signal (LT);
    a beam-splitting unit (12), connected to the light-emitting unit (11), and configured to receive and transmit the optical emission signal (LT);
    an optical antenna unit (13), connected to the beam-splitting unit (12), configured to emit the optical emission signal (LT), receive a diffusely reflected optical return signal (RLT), and transmit a diffusely reflected optical return signal (RLT) to the beam-splitting unit (12);
    a photodetector unit (14), connected to the beam-splitting unit (12), and configured to receive the diffusely reflected optical return signal (RLT); and
    a signal processing unit (15), connected to the photodetector unit (14), and configured to generate a sensing information based on the diffusely reflected optical return signal (RLT).

2. The optical phased array chip of claim 1, wherein the beam-splitting unit (12) comprises:

    a first directional coupling unit (D1), a first side (D1S1) thereof connected to the light-emitting unit (11) and the photodetector unit (14), and a second side (D1S2) thereof connected to the optical antenna unit (13);
    wherein, the first side (D1S1) and the second side (D1S2) are opposite sides of the first directional coupling unit (D1).

3. The optical phased array chip of claim 1, wherein the beam-splitting unit (12) comprises:

    a first directional coupling unit (D1), a first side (D1S1) thereof connected to the light-emitting unit (11); and
    a second directional coupling unit (D2), a first side (D2S1) thereof connected to a second side (D1S2) of the first directional coupling unit (D1), and a second side (D2S2) thereof connected to the optical antenna unit (13);
    wherein, the first side (D1S1) of the first directional coupling unit (D1) or the first side (D2S1) of the second directional coupling unit (D2) is connected to the photodetector unit (14).

4. The optical phased array chip of claim 1, wherein the beam-splitting unit (12) comprises:

a first multimode interference unit (M1), a first side (M1S1) thereof connected to the light-emitting unit (11) and the photodetector unit (14), and a second side (M1S2) thereof connected to the optical antenna unit (13);

wherein, the first side (M1S1) and the second side (M1S2) are opposite sides of the first multimode interference unit (M1).

5. The optical phased array chip of claim 1, wherein the beam-splitting unit (12) comprises:

a first multimode interference unit (M1), a first side (M1S1) thereof connected to the light-emitting unit (11); and

a second multimode interference unit (M2), a first side (M2S1) thereof connected to a second side (M1S2) of the first multimode interference unit (M1), and a second side (M2S2) thereof connected to the optical antenna unit (13);

wherein, the first side (M1S1) of the first multimode interference unit (M1) or the first side (M2S1) of the second multimode interference unit (M2) is connected to the photodetector unit (14).

6. The optical phased array chip of claim 1, wherein the beam-splitting unit (12) comprises:

a first ring resonance unit (R1), a first side (R1S1) thereof connected to the light-emitting unit (11) and the photodetector unit (14), and a second side (R1S2) thereof connected to the optical antenna unit (13);

wherein, the first side (R1S1) and the second side (R1S2) are opposite sides of the first ring resonance unit (R1).

7. The optical phased array chip of claim 1, wherein the beam-splitting unit (12) comprises:

a first ring resonance unit (R1), a first side (R1S1) thereof connected to the light-emitting unit (11); and

a second ring resonance unit (R2), a first side (R2S1) thereof connected to a second side (R1S2) of the first ring resonance unit (R1), and a second side (R2S2) thereof connected to the optical antenna unit (13);

wherein, the first side (R1S1) of the first ring resonance unit (R1) or the first side (R2S1) of the second ring resonance unit (R2) is connected to the photodetector unit (14).

8. The optical phased array chip of claim 3,5, or 7, wherein the beam-splitting unit (12) comprises: an optical phase shifting unit (12PS), comprising a first port (P1) and a second port (P2), the first port (P1) connected to the second side (D2S2, M2S2, R2S2) of the second directional coupling unit (D2) the second multimode interference unit (M2) or the second ring resonance unit (R2), and the second port (P2) connected to the optical antenna unit (13).

9. An optical phased array chip (1), comprising:

a light-emitting unit (11), configured to generate an optical emission signal (LT);
a plurality of optical antenna units (13);
a beam-splitting unit (12), disposed between the light-emitting unit (11) and the optical antenna units (13);
a photodetector unit (14), connected to the beam-splitting unit (12); and
a signal processing unit (15), connected to the photodetector unit (14);
wherein, the beam-splitting unit (12) is configured to receive and transmit the optical emission signal (LT) to the optical antenna units (13), the optical antenna units (13) are configured to emit the optical emission signal (LT) and receive a diffusely reflected optical return signal (RLT), the beam-splitting unit (12) is configured to receive and transmit the diffusely reflected optical return signal (RLT) to the photodetector unit (14), the photodetector unit (14) is configured to receive and transmit the diffusely reflected optical return signal (RLT) to the signal processing unit (15), and the signal processing unit (15) is configured to generate a sensing information based on the diffusely reflected optical return signal (RLT).

10. The optical phased array chip of claim 9, further comprising:

a plurality of optical phase shifting units (PS), each of the optical phase shifting units connected to each of the optical antenna units, and configured to receive, phase shift, and transmit the optical emission signal;
wherein, the optical phase shifting units (PS) comprise:
a thermo-optics phase shifter or a free-carrier-depletion-based phase shifter.

11. The optical phased array chip of claim 10, further comprising:

a plurality of phase-compensated waveguide units (WG), each of the phase-compensated waveguide units (WG) connected to each of the optical phase shifting units (PS) and each of the optical antenna units (13), and configured to receive and transmit the optical emission signal (LT);
wherein, each of the phase-compensated waveguide units (WG) performs a phase compensation on the optical emission signal (LT).

12. The optical phased array chip of claim 9, wherein the beam-splitting unit (12) comprises:

a first directional coupling unit (D1), a first side (D1S1) thereof connected to the light-emitting unit (11) and the photodetector unit (14), and a second side (D1S2) thereof connected to the optical antenna units (13), wherein, the first side (D1S1) and the second side (D1S2) are opposite sides of the first directional coupling unit (D1);
a first multimode interference unit (M1), a first side (M1S1) thereof connected to the light-emitting unit (11) and the photodetector unit (14), and a second side (M1S2) thereof connected to the optical antenna units (13), wherein, the first side (M1S1) and the second side (M1S2) are opposite sides of the first multimode interference unit (M1); or
a first ring resonance unit (R1), a first side (R1S1) thereof connected to the light-emitting unit (11) and the photodetector unit (14), and a second side (R1S2) thereof connected to the optical antenna units (13), wherein, the first side (R1S1) and the second side (R1S2) are opposite sides of the first ring resonance unit (R1).

13. A sensing method of an optical phased array chip, comprising:

emitting an optical emission signal (LT) to an object to be measured (O) through a plurality of optical antenna units (13) of the optical phased array chip (1);
generating a diffusely reflected optical return signal (RLT) corresponding to the optical emission signal (LT) through the object to be measured (O);
receiving and transmitting the diffusely reflected optical return signal (RLT) to a beam-splitting unit (12) of the optical phased array chip (1) through the optical antenna units (13);
transmitting the diffusely reflected optical return signal (RLT) to a signal processing unit (15) of the optical phased array chip (1) through the beam-splitting unit (12); and
generating a sensing information through the signal processing unit (15).

14. The optical phased array chip of claim 13, wherein between emitting an optical emission signal (LT) to the object to be measured (O) through the optical antenna units (13) of the optical phased array chip (1) and generating the diffusely reflected optical return signal (RLT) corresponding the optical emission signal (LT) through the object to be measured (O) further comprises:
performing a phase compensation on the optical emission signal (LT) through a plurality of phase-compensated waveguide units (WG) of the optical phased array chip (1).

15. The optical phased array chip of claim 13, wherein transmitting the diffusely reflected optical return signal (RLT) to a signal processing unit (15) of the optical phased array chip (1) through the beam-splitting unit (12) further comprises:

transmitting the diffusely reflected optical return signal (RLT) to a plurality of photodetector units (14) of the optical phased array chip (1) through the beam-splitting unit (12);
converting the diffusely reflected optical return signal (RLT) into an electric current signal form through the photodetector units (14);
generating a sensing information through the signal processing unit (15) further comprises:

generating a distance and speed information based on the diffusely reflected optical return signal (RLT) of the electric current signal form through one of the photodetector units (14) through the signal processing unit (15); and
generating a light energy information based on the diffusely reflected optical return signal (RLT) of the electric current signal form through another one of the photodetector units (14) through the signal processing unit (15).

<u>1</u>

FIG.1

13

FIG.2A

13A

13B

FIG.2B

FIG.2C

FIG.3

FIG.4A

FIG.4B

FIG.4C

FIG.5

81 82

83

FIG.6A

93 923 922 921 911 912 913

FIG.6B

FIG.7A

FIG.7B

12D

M1

M1P2

RLT

LT

M1P4

M1S1  M1S2

M1W

RLT

M1L

RLT

M1P3

LT

LT

M1P1

# FIG.8A

FIG.8B

FIG.8C

FIG.9

12G

R1

R1P2

RLT

LT

R1P4

R1S1 | R1S2

R1G

RLT

RLT

R1P3

LT

LT

R1P1

# FIG.10A

R1

R1P2

RLT

LT

R1P4

R1S1 | R1S2

12H

R1G

R1P3,R2P2

RLT

R2

RLT

R2S1 | R2S2

RLT

R1P1

RLT

R2P4

LT

LT

LT

R2G

RLT

RLT

R2P1

RLT

R2P3

LT

FIG.10B

FIG.10C

1A

FIG.11

FIG.12A

1A

FIG.12B

<u>1B</u>

FIG.12C

instantaneous frequency

FIG.13

WG

FIG.14

FIG.15A

FIG.15B

| Emitting emitted light signal to object to be measured through multiple optical antenna units of optical phase array chip | S01 |

| Generating diffuse reflection light signal corresponding to emitted light signal through object to be measured | S02 |

| Receiving and transmitting diffuse reflection light signal to beam-splitting unit of optical phase array chip through optical antenna units | S03 |

| Transmitting diffuse reflection light signal to processing unit of optical phase array chip through beam-splitting unit | S04 |

| Generating sensing information through processing unit | S05 |

FIG.16

**EUROPEAN SEARCH REPORT**

Application Number

EP 25 18 2093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 215 867 107 U (SUZHOU AIKEYINGNUO ROBOT TECH CO LTD) 18 February 2022 (2022-02-18) * figure 1 * * abstract * * paragraphs [0005] - [0007], [0013] * * claim 1 * ----- | 1-15 | INV. G01S7/481 G01S17/08 G01S17/58 |
| X | US 2022/003870 A1 (BYUN HYUNIL [KR] ET AL) 6 January 2022 (2022-01-06) * figure 19 * * abstract * * paragraph [0062] * * claims 1,17 * ----- | 1-15 | |

TECHNICAL FIELDS
SEARCHED     (IPC)

G01S

The present search report has been drawn up for all claims

| Place of search | Date of completion of the search | Examiner |
|---|---|---|
| Munich | 19 November 2025 | Alberga, Vito |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 18 2093

19-11-2025

| Patent document cited in search report | Publication date | Patent family member(s) | Publication date |
|---|---|---|---|
| CN 215867107 U | 18-02-2022 | NONE | |
| US 2022003870 A1 | 06-01-2022 | CN 113885010 A | 04-01-2022 |
| | | EP 3933436 A1 | 05-01-2022 |
| | | JP 7699966 B2 | 30-06-2025 |
| | | JP 2022013729 A | 18-01-2022 |
| | | KR 20220004432 A | 11-01-2022 |
| | | US 2022003870 A1 | 06-01-2022 |

EPO FORM P0459